(19) Europäisches Patentamt
European Patent Office
Office européen des brevets

(11) EP 4 734 583 A1

(12) EUROPEAN PATENT APPLICATION
published in accordance with Art. 153(4) EPC

(43) Date of publication:
29.04.2026 Bulletin 2026/18

(51) International Patent Classification (IPC):
*H04W 16/20* (2009.01)

(21) Application number: 24830477.6

(52) Cooperative Patent Classification (CPC):
H04W 16/20

(22) Date of filing: 11.06.2024

(86) International application number:
PCT/CN2024/098460

(87) International publication number:
WO 2025/001831 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 CN 202310788548

(71) Applicant: ZTE CORPORATION
Shenzhen, Guangdong 518057 (CN)

(72) Inventors:
• LI, Shulin
Shenzhen, Guangdong 518057 (CN)
• LIU, Qiaoyan
Shenzhen, Guangdong 518057 (CN)
• WU, Jiwen
Shenzhen, Guangdong 518057 (CN)
• ZHANG, Huanqing
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **CONTROL METHOD AND APPARATUS FOR COMMUNICATION NETWORKING SYSTEM, AND COMMUNICATION DEVICE AND STORAGE MEDIUM**

(57) The present application discloses a control method and apparatus for a communication networking system, a communication device and a storage medium, belonging to the technical field of high-speed communications. The control method for the communication networking system includes: determining a mobile carrier in a communication scenario; and sequentially controlling a plurality of RRUs in the communication networking system to provide uplink and downlink network coverage to user terminals on the mobile carrier according to the traveling direction of the mobile carrier and the physical order of the plurality of RRUs.

```
                                            ┌─ S10
┌─────────────────────────────────────────────────────────┐
│                                                           │
│   determining the mobile carrier in the communication     │
│   scenario                                                │
│                                                           │
└─────────────────────────────────────────────────────────┘
                          │
                          ▼                 ┌─ S20
┌─────────────────────────────────────────────────────────┐
│  controlling the RRUs sequentially to provide uplink and  │
│  downlink network coverage for the user terminals on the  │
│  mobile carrier according to the traveling direction of   │
│  the mobile carrier and the physical order of multiple    │
│  RRUs in the communication networking system              │
└─────────────────────────────────────────────────────────┘
```

FIG. 2

**Description**

**CROSS-REFERENCE TO RELATED APPLICATIONS**

The present application claims priority to Chinese Patent Application No. 202310788548.6, filed June 29, 2023, the entire contents of which are incorporated herein by reference.

**TECHNICAL FIELD**

The present application relates to the technical field of communication networking, and in particular to a control method and apparatus for a communication networking system, a communication device, and a computer-readable storage medium.

**BACKGROUND**

In communication scenarios such as high-speed rail or highways, the communication network is typically deployed in a linear chain configuration. This linear chain network deployment involves setting up two back-to-back network remote radio units (RRUs) on the same pole when deploying communication base stations. Each RRU is then connected to a corresponding antenna panel to propagate communication in two separate back-to-back directions.

In the related art, increasing the number of network RRUs to reduce the distance between two base stations is used to improve coverage and communication sensing speed for high-speed users. However, this approach has very limited effect on improving the uplink reception and downlink transmission capabilities of high-speed users in the network's overlapping area between two RRUs.

**SUMMARY**

The embodiments of the present application provide a control method for a communication networking system. The method includes: determining a mobile carrier in a communication scenario; and sequentially controlling multiple remote radio units, RRUs, in the communication networking system to provide uplink and downlink network coverage to a user terminal on the mobile carrier according to a traveling direction of the mobile carrier and a physical order of the multiple RRUs.

In addition, in order to achieve the above purpose, the embodiments of the present application further provide an control apparatus for a communication networking system, including: a determination module configured to determine a mobile carrier in a communication scenario; and a networking control module configured to sequentially control multiple RRUs in the communication networking system to provide uplink and downlink network coverage to user terminals on the mobile carrier according to a traveling direction of the mobile carrier and a physical order of the multiple RRUs.

Each functional module of the control apparatus for the communication networking system implements the steps of the control method for the communication networking system as described above during operation.

In addition, the embodiments of the present application further provide a communication device, including: a memory, a processor, and a computer program stored in the memory and executable on the processor, and the computer program is configured to implement the control method for the communication networking system as described above.

In addition, the embodiments of the present application further provide a computer-readable storage medium, a computer program is stored on the storage medium, when the computer program is executed by a processor, the control method for the communication networking system as described above is implemented.

**BRIEF DESCRIPTION OF THE DRAWINGS**

FIG. 1 is a schematic structural diagram of an operating equipment of a hardware operating environment involved in an embodiment of the present application.

FIG. 2 is a flowchart illustrating steps of a control method for a communication networking system according to an embodiment of the present application.

FIG. 3 is a schematic structural diagram of a base station involved in the control method for the communication networking system according to an embodiment of the present application.

FIGS. 4a, 4b and 4c are schematic diagrams illustrating the connection state between the RRU and an antenna involved in the control method for the communication networking system according to an embodiment of the present application.

FIG. 5 is a schematic diagram of an application scenario involved in the control method for the communication networking system according to an embodiment of the present application.

FIGS. 6 and 7 are schematic diagrams illustrating application scenarios related to the control method for the communication networking system according to a first embodiment of the present application.

FIG. 8 is a schematic diagram illustrating an application scenario related to the control method for the communication networking system according to a second embodiments of the present application.

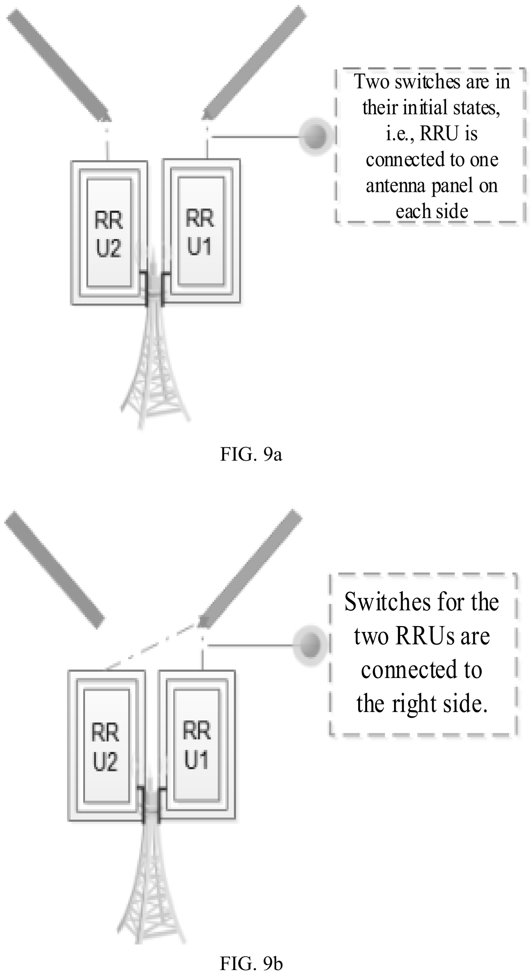

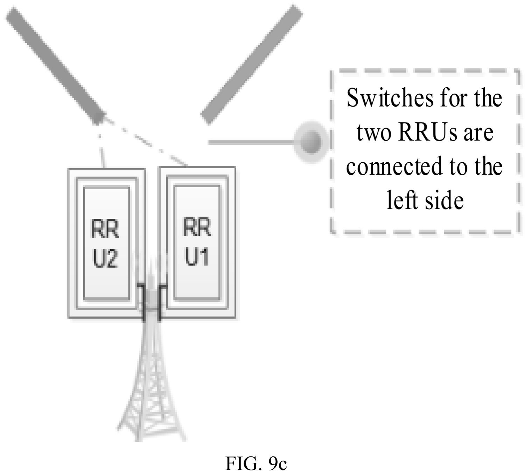

FIGS. 9a, 9b, and 9c are schematic diagrams illustrating the connection state between the RRU and the antenna in the control method for the communication networking system according to another embodiment of the present application.

FIG. 10 is a flowchart illustrating application steps of the control method for the communication networking system according to an embodiment of the present application.

FIGS. 11 to 17 are schematic diagrams illustrating application scenarios related to the control method for the communication networking system according to an embodiment of the present application.

FIG. 18 is an architecture diagram of functional modules of a control apparatus for the communication networking system according to an embodiment of the present application.

The realization of the purpose, functional features, and advantages of the present application will be further explained in conjunction with the embodiments and with reference to the accompanying drawings.

**DETAILED DESCRIPTION OF THE EMBODIMENTS**

The specific embodiments described herein are merely illustrative of the present application and are not intended to limit the scope of the present application.

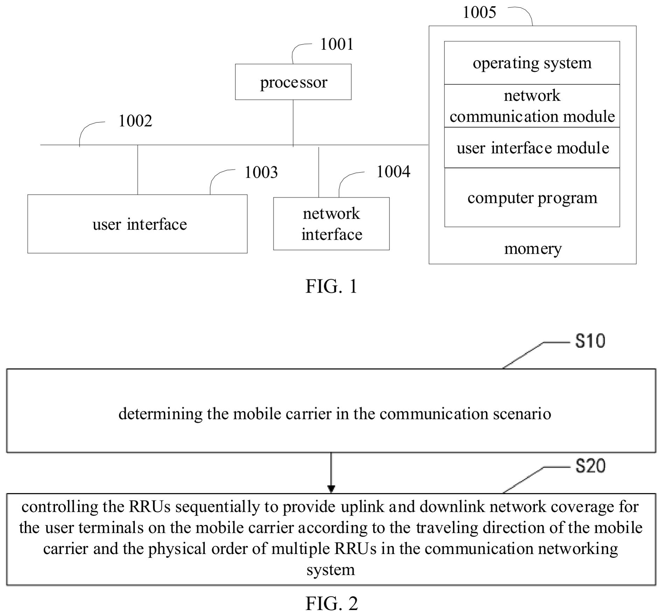

Referring to FIG. 1, FIG. 1 is a schematic structural diagram of the operating device of the hardware operating environment involved in the embodiments of the present application.

In this embodiment, the operating device of the hardware operating environment involved in the embodiment of the present application can be a communication device including a control apparatus for a communication networking system. This communication device can be a linear chain-type network control apparatus for high-speed rail or highways. Based on different design needs of actual applications, this operating device can also be other terminal devices connected to or integrated into the communication networking system, thereby enabling control of the communication networking system. For example, the operating device can be a smartphone, personal computer (PC), tablet or other terminals.

As shown in FIG. 1, the operating device may include: a processor 1001 such as a central processing unit (CPU), a communication bus 1002, a user interface 1003, a network interface 1004 and a memory 1005. The communication bus 1002 is used to enable communication between these components. The user interface 1003 may include a display and an input unit such as a keyboard. The user interface 1003 may also include standard wired and wireless interfaces. The network interface 1004 may include standard wired and wireless interfaces (such as wireless-fidelity (Wi-Fi) interfaces). The memory 1005 may be high-speed random access memory (RAM) or stable non-volatile memory (NVM), such as disk storage. The memory 1005 may also be a storage device independent of the aforementioned processor 1001.

Those skilled in the art can understand that the structure shown in FIG. 1 does not constitute a limitation on the operating device and may include more or fewer components than shown, or combine certain components, or have different component arrangements.

As shown in FIG. 1, the memory 1005 as a storage medium may include an operating system, a data storage module, a network communication module, a user interface module and a computer program.

In the operating device shown in FIG. 1, the network interface 1004 is mainly used for data communication with other devices; the user interface 1003 is mainly used for data interaction with users; and the processor 1001 and the memory 1005 in the operating device of the present application can be provided in the operating device. The operating device calls the computer program stored in the memory 1005 through the processor 1001 and performs the following operations: determining the mobile carrier in the communication scenario; and sequentially controlling a plurality of RRUs in the communication networking system to provide uplink and downlink network coverage for user terminals on the mobile carrier according to the traveling direction of the mobile carrier and the physical order of the plurality of RRUs.

For example, the processor 1001 may call the computer program stored in the memory 1005 and perform the following operations: determine the current RRU that provides network services to the user terminals on the mobile carrier in sequence among the plurality of RRUs in the communication networking system based on the traveling direction of the mobile carrier and the physical order of the plurality of RRUs; and adjust the antenna switch of the next RRU to control the current RRU and the next RRU to simultaneously provide uplink and downlink network coverage for the user terminals, when the mobile carrier enters the network coverage area of the current RRU.

For example, the processor 1001 may call a computer program stored in the memory 1005 and perform the following operations: obtain the number of user terminals covered by the current RRU; if the number exceeds a preset threshold, determine that the mobile carrier has entered the network coverage area of the current RRU.

For example, the processor 1001 may call a computer program stored in the memory 1005 and perform the following operations: obtain measurement information continuously reported by the user terminals; determine the plurality of target RRUs with the strongest signals among the plurality of RRUs according to the measurement information; and determine the physical order of the plurality of RRUs according to the continuous change pattern of the target RRUs.

For example, the processor 1001 may call the computer program stored in the memory 1005 and perform the following operations: when there is no opposing carrier in the default network coverage area of the next RRU, adjust the antenna switch of the next RRU so that the next RRU is connected to the antenna panel on the same side of the current RRU. The traveling direction of the mobile carrier is opposite to the traveling direction of the opposing carrier.

For example, the antenna panel on the same side of the current RRU includes a first antenna panel and a second antenna panel. The processor 1001 can call the computer program stored in the memory 1005 and also perform the following operations: when the current RRU is connected to the first antenna panel, adjust the antenna switch of the next RRU so that the (i+1)th RRU is connected to the first antenna panel or the second antenna panel.

For example, the processor 1001 may call the computer program stored in the memory 1005 and perform the following operations: control the plurality of RRUs to perform uplink and downlink network coverage on their respective default network coverage areas at a preset time, the preset time is the time when the user terminal reports the channel sounding reference signal to the communication networking system, or the preset time is the time when the communication networking system sends system information to the user terminal.

Based on the operating device structure of the hardware operating environment involved in the above-mentioned embodiments of the present application, the overall concept of the control method for the communication networking system according to the embodiments of the present application is first proposed.

In communication scenarios such as high-speed rail or highways, the communication networking is typically deployed in a linear chain configuration. This linear chain networking deployment involves setting up two back-to-back network RRUs on the same pole when deploying communication base stations. Each RRU is then connected to a corresponding antenna panel to propagate communication in two separate back-to-back directions.

In the related arts, increasing the number of network RRUs to reduce the distance between two base stations is used to improve coverage and communication sensing speed for high-speed users. However, this approach has very limited effect on improving the uplink reception and downlink transmission capabilities of high-speed users in the network's overlapping area between two RRUs.

To address the aforementioned issues, the embodiments of the present application propose a control method for a communication networking system. By identifying and determining the presence of high-speed mobile carriers such as vehicles, high-speed trains, or airplanes within the communication scenario to which the communication networking system belongs, the method sequentially controls the multiple RRUs to provide uplink and downlink network coverage for high-speed users on the mobile carrier, based on the traveling direction of the mobile carrier and the physical order of the plurality of RRUs in the communication networking system.

Thus, compared to the related art in which the coverage and communication sensing rates for high-speed users is improved simply by increasing the number of network RRUs to reduce the distance between two base stations, the embodiments of the present application can adjust the antenna switches of adjacent RRUs in advance when a high-speed mobile carrier such as a vehicle, high-speed train, or airplane is about to enter the network coverage area of a certain RRU, simply by identifying whether there is a vehicle and according to the physical order of each RRU in the cell. This enables downlink power sharing between the two RRUs and/or doubles the number of transmit and receive antennas, thereby allowing the power of the RRUs to change flexibly with the operation of the mobile carrier and achieving joint demodulation and transmission of uplink and downlink on the network, thus greatly improving the uplink and downlink sensing rates for high-speed users.

Based on the overall concept of the control method for the communication networking system according to the above embodiments of the present application, various embodiments of the control method for the communication networking system of the present application are proposed.

The control method for the communication networking system of the present application is applied to the above-mentioned operating device. The operating device can be a communication device that includes a control apparatus for the communication networking system. The communication device can be connected to the communication networking system or integrated into the communication networking system, thereby enabling control of the communication networking system. Based on different design requirements in practical applications, the control method for the communication networking system of the present application can be applied to other terminal devices in different embodiments. However, for ease of understanding and explanation of the technical solution, the following will use the communication device as the subject of the embodiments to describe the control method for the communication networking system of the present application.

Please refer to FIG. 2, FIG. 2 is a flowchart illustrating the steps of the control method for the communication networking system according to a first embodiment of the present application. Although the logical order is shown in the flowchart, in some cases, the control method for the communication networking system of the present application may, of course, execute the steps shown or described in a different order than that shown here.

As shown in FIG. 2, in the first embodiment of the control method for the communication networking system of the present application, the control method for the communication networking system according to the present application may include the following steps: step S10, determining the mobile carrier in the communication scenario.

In this embodiment, the communication device identifies high-speed users in the communication scenario to determine whether high-speed mobile carriers such as cars, high-speed trains, or airplanes are present in the communication scenario.

In this embodiment and other embodiments, the communication networking system is a communication networking system (also known as a high-speed communication networking system) developed in the communication field to adapt to user groups that are relatively mobile. This communication networking system can provide uplink and downlink network coverage for mobile user groups (especially high-speed mobile user groups). For example, the communication networking system can be a linear chain networking system in a high-speed rail scenario or a highway scenario, and the communication device can be a device that controls and provides the network coverage for high-speed users in the linear chain networking system, such as a communication base station building baseband unit (BBU). Alternatively, the communication equipment can also be a device that directly provides network coverage for high-speed users, such as a network RRU.

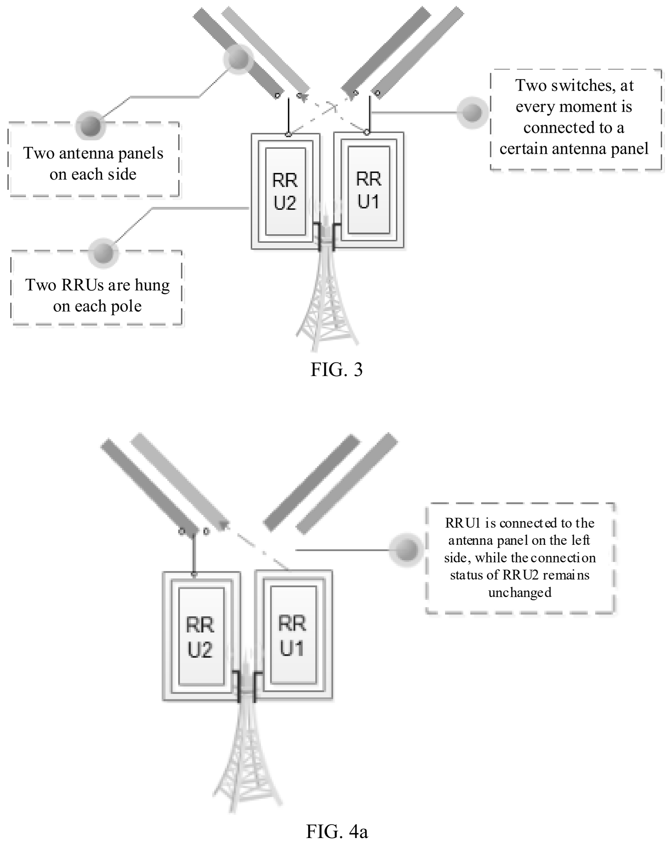

Furthermore, the aforementioned communication scenarios refer to those where the aforementioned communication networking system has been deployed, such as the high-speed rail scenario, the highway scenario, and scenarios in the communication field where the user group is relatively mobile, such as subways and air routes. In these communication scenarios where the aforementioned communication networking system has been deployed, the base station BBU of the communication networking system can be configured as shown in FIG. 3, i.e.:

A base station is configured with 2 RRUs and 4 antenna panels (specifically, 8T antennas). Each RRU is connected to only one antenna panel at a time, and the base station controls which antenna panel each RRU is connected to via a switch. Based on this, the connection between a single RRU and the antenna panel on the base station can be switched in two ways via the switch: one is that the RRU is connected to the left 8T antenna while the right 8T antenna is disconnected; the other is that the RRU is connected to the right 8T antenna while the left 8T antenna is disconnected.

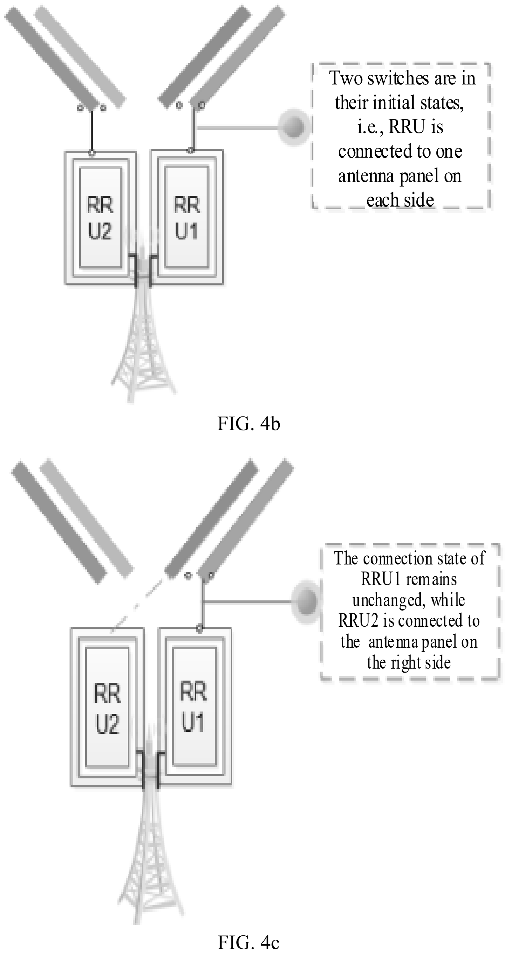

In an embodiment, the communication networking system consisting of two RRUs is configured for each base station. There are a total of three combinations of connections between the two RRUs on the base station and the antenna panels, i.e.,: the two RRUs are connected to the two antenna panels on the left side of the base station respectively (as shown in FIG. 4a), the two RRUs are connected to one antenna panel on each side of the base station respectively (as shown in FIG. 4b), and the two RRUs are connected to the two antenna panels on the right side of the base station respectively (as shown in FIG. 4c).

In an embodiment, as shown in FIG. 4b, the connection state in which the two RRUs are respectively connected to one antenna panel on the left and right sides of the base station is the initial default state of the connection between the two RRUs and the antenna panels on the base station in the communication networking system.

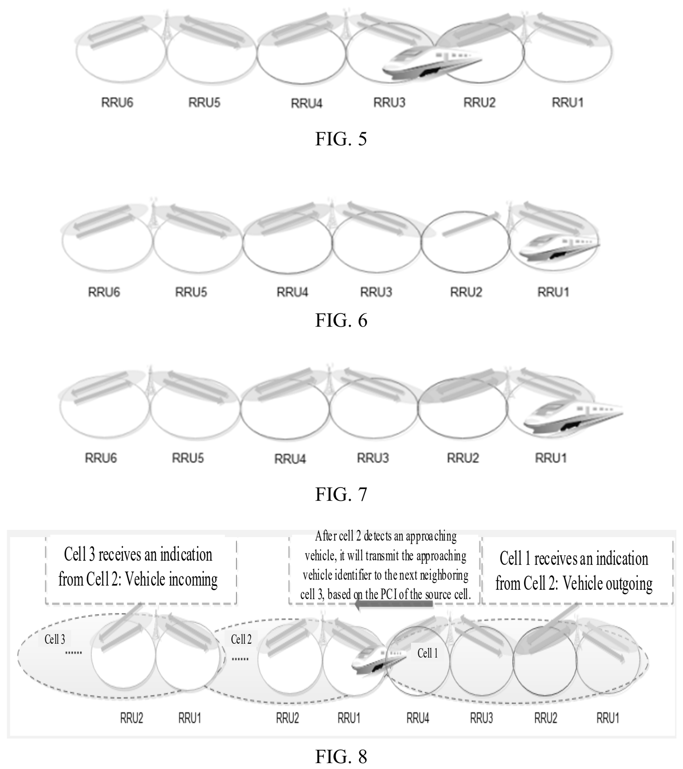

For example, assuming the communication device is the aforementioned base station BBU, in the high-speed rail communication scenario shown in FIG. 5, the base station BBU controls its two RRUs to provide uplink and downlink network coverage to high-speed users in the current communication scenario. At this time, while the high-speed train is moving, the base station BBU continuously monitors and identifies the number of high-speed users. If this number meets a certain threshold, it determines that the high-speed train has appeared in the current communication scenario and the high-speed train is determined as the currently identified high-speed moving vehicle.

Step S20, controlling the RRUs sequentially to provide uplink and downlink network coverage for the user terminals on the mobile carrier according to the traveling direction of the mobile carrier and the physical order of multiple RRUs in the communication networking system.

In this embodiment, when the communication device determines that a high-speed mobile carrier has appeared in the communication scenario, it further determines the traveling direction of the mobile carrier. Thus, the communication device can sequentially control the multiple RRUs to provide uplink and downlink network coverage to the user terminal on the mobile carrier that is also operating at high speed, according to the traveling direction and the physical order of the multiple RRUs in the communication networking system in which it is located.

In this embodiment and other embodiments, the control method for the communication networking system of the present application uses the cell merging networking method of the base station BBU to design algorithms for vehicle identification, RRU location positioning and user affiliation to obtain the RRU location of the user group distribution, and then adjusts the transmission power and coverage of each antenna device. Thus, the control method for the communication networking system of the present application can, on the one hand, generate a gain of 3dB by making reasonable use of the power sharing of RRU, thereby improving the downlink coverage and downlink performance in communication scenarios such as high-speed rail, highway, subway and air routes. On the other hand, by doubling the number of antennas in the same direction of the base station, uplink and downlink antenna performance can be enhanced by 4 times when the user is in the overlap area between two base stations. That is, the control method for the communication networking system of the present application can achieve joint equalization and improve uplink reception performance through uplink joint reception, and can achieve coherent JT through downlink joint shaping and transmission of multiple RRUs. Uplink and downlink can achieve 3-6dB gain, thereby effectively improving user perception in weak field coverage areas.

Based on this, the step S20 may include: step S21, determining the current RRU that provides network services to the user terminal on the mobile carrier in sequence in the multiple RRUs in the communication networking system, according to the traveling direction of the mobile carrier and the physical order of the multiple RRUs.

In this embodiment, after the communication device further identifies and determines the traveling direction of the high-speed mobile carrier and the physical order of multiple RRUs in the communication networking system in which it is located, it can determine the current RRU that provides network services to the user terminal on the mobile carrier in sequence among the multiple RRUs during the operation of the mobile carrier based on the traveling direction and the physical order.

In this embodiment and other embodiments, the communication device can also determine that when the mobile carrier has entered the network coverage area of a current RRU among the multiple RRUs at the current moment, and thus the current RRU provides network services to the user terminal on the mobile carrier. Based on this, the communication device can determine each current RRU that a high-speed mobile carrier sequentially enters among the plurality of RRUs.

Step S22, when the mobile carrier enters the network coverage area of the current RRU, adjusting the antenna switch of the next RRU of the current RRU to control the current RRU and the next RRU to simultaneously provide uplink and downlink network coverage for the user terminal.

In this embodiment, when the communication device determines that a high-speed mobile carrier has entered the network coverage area of a current RRU among the multiple RRUs, in order to improve the perception of uplink and downlink network coverage for high-speed users in the entire communication scenario, the communication device immediately determines the next RRU adjacent to the current RRU in the traveling direction of the mobile carrier. Subsequently, the communication equipment adjusts the antenna switch of the next RRU to control the current RRU and the next RRU to simultaneously provide uplink and downlink network coverage for the user terminal on the mobile carrier.

In this embodiment and other embodiments, the communication device can determine the physical order of multiple RRUs in the communication networking system according to the changes in the measured signal strength of high-speed user terminals. This allows the adjacent RRUs to be notified in advance to adjust their antennas when a high-speed vehicle or other mobile carrier is about to enter a particular RRU. This achieves the effect of sharing downlink power and doubling the number of transmit and receive antennas between the two RRUs, thereby realizing joint uplink and downlink demodulation and transmission, effectively improving the uplink and downlink perceived speed of network services for users in high-speed communication scenarios.

For example, as shown in FIG. 6, when the communication device acts as the base station BBU in the communication networking system, if the base station BBU detects that a high-speed mobile carrier has entered the current RRU1, the base station BBU will determine that the mobile carrier has entered the network coverage area of RRU1 according to the pre-learned physical order of the multiple RRUs in the communication networking system RRU1-RRU2-RRU3-RRU4-RRU5-RRU6 and the traveling direction of the mobile carrier. At this time, it is necessary to connect the next RRU2 adjacent to the RRU1 in the traveling direction to the antenna on the right side of the base station, so that the RRU2 and the RRU1 can simultaneously provide uplink and downlink network services to the user terminal on the mobile carrier in the same direction. Thus, for the user terminal on the high-speed mobile carrier, it is equivalent to doubling the number of antennas providing network uplink and downlink services, and increasing downlink power by 3dB.

In an embodiment, for the original coverage area of the next RRU2, the communication device, acting as a base station BBU, will only switch the RRU2 to the antenna connected to the left side of the base station during the single reference signal (SRS) moment (the moment when the user terminal reports the channel sounding reference signal to the communication networking system). Meanwhile, the antenna connection state of the i-th RRU1 can remain unchanged, ensuring that the uplink and downlink network data of the user terminal are jointly received and transmitted by the two RRUs.

Based on this, in this embodiment and other embodiments, the control method for the communication networking system of the present application may further include the following steps.

Step S30, controlling the multiple RRUs to perform uplink and downlink network coverage on their respective default network coverage areas at a preset time, the preset time is the time when the user terminal reports the channel sounding reference signal to the communication networking system, or the preset time is the time when the communication networking system sends system information to the user terminal.

In this embodiment, when the communication device sequentially controls the RRUs to provide uplink and downlink network coverage for user terminals on a high-speed mobile carrier, once it detects that the current time has reached the moment when the user terminal reports the channel sounding reference signal to the communication networking system, or the current time has reached the moment when the communication networking system sends system information to the user terminal, the communication device controls one or more of the multiple RRUs to provide uplink and downlink network coverage for their respective default network coverage areas.

In this embodiment and other embodiments, the default network coverage area of the controlled RRU is the network coverage area where the RRU provides uplink and downlink network services when the connection state between the controlled RRU and the antenna panel on the base station is the initial default state as shown in FIG. 4b.

For example, assuming that the communication networking system in which the communication device is located adopts the cell merging networking method, the communication device, when acting as the base station BBU, can be connected to multiple RRUs. Furthermore, the communication networking system can use the same Cell ID and its associated common channel. The initial state of the antennas connected to the antenna panels of each RRU is: the RRU on the base station side is connected to one antenna panel on its own side (as shown in FIG. 4b). At this time, since the antenna panels on both sides of the base station are pointed to each side, both the left and right sides of the base station will have uplink and downlink network coverage. As shown in FIG. 7, if a user terminal appears in a high-speed mobile carrier, the user terminal will only receive the signal from the antenna connected to one of the RRUs, and the uplink and downlink services will be received and transmitted independently by this RRU.

In addition, the communication device, as a base station BBU, will configured the same SRS resources for all N RRUs belonging to a high-speed cell. Thus, at the periodic time point of the SRS configuration, the base station BBU switches the connection state between each RRU and the antenna to the initial default state as shown in FIG. 4b. Then, after the SRS time point, the base station BBU immediately switches the connection state between each RRU and the antenna back to the connection state before this SRS time point. For example, in a 5ms frame structure, if the S slot is configured with 4 symbols of SRS, and the base station BBU controls the connection state of RRU1 and RRU2 to the antenna so that both RRU1 and RRU2 are connected to the antenna panel on the left side of the base station. At the beginning of the first SRS symbol, the base station BBU needs to adjust the connection state of RRU2 to the antenna so that RRU2 is connected to the antenna panel on the right side of the base station, while the connection state of RRU1 to the antenna remains unchanged. At this time, the connection state of RRU1 and RRU2 to the antenna is the initial default state. After the 4 SRS symbols are transmitted, the connection state of RRU1 to the antenna remains unchanged, while the connection state of RRU2 to the antenna is immediately switched back by the base station BBU to the original state of being connected to the antenna on the left side of the base station.

In this embodiment, the communication device identifies user terminals within its high-speed communication scenario to determine whether a high-speed mobile carrier is present in that scenario. Simultaneously or subsequently, the communication device determines the traveling direction of the mobile carrier. Based on this direction and the physical order of multiple RRUs within its communication networking system, the communication device can sequentially control these RRUs to provide uplink and downlink network coverage to the high-speed user on the mobile carrier.

Thus, compared to related technologies that improve network coverage and communication sensing speed of user terminals in high-speed communication scenarios by simply increasing the number of network RRUs to reduce the distance between two base stations, the embodiments of the present application can adjust the antenna switch of adjacent RRUs in advance when a high-speed mobile carrier such as a vehicle, high-speed train, or airplane is about to enter the network coverage area of a certain RRU, simply by identifying whether there is a vehicle and according to the physical order of each RRU in the cell. This enables downlink power sharing between the two RRUs and/or doubles the number of transmit and receive antennas, thereby allowing the power of the RRUs to change flexibly with the operation of the mobile carrier and achieving joint demodulation and transmission of uplink and downlink on the network, thus greatly improving the uplink and downlink sensing rates for high-speed users.

Based on the first embodiment of the control method for the communication networking system of the present application described above, a second embodiment of the control method for the communication networking system of the present application is proposed.

In the second embodiment of the control method for the communication networking system of the present application, the control method for the communication networking system of the present application may further include the following steps: step S40, obtaining the number of user terminals covered by the current RRU; and step S50, if the number exceeds a preset threshold, determining that the mobile carrier has entered the network coverage area of the current RRU.

In this embodiment, when the communication device determines whether a high-speed mobile carrier has entered the network coverage area of a current RRU among the multiple RRUs, it can adopt the same principle as the method of identifying and determining whether there is an oncoming vehicle in the current communication scenario to obtain the number of user terminals on the mobile carrier covered by the current RRU, and detect in real time whether the number exceeds a preset threshold. If the number exceeds the preset threshold, it is determined that the mobile carrier has entered the uplink and downlink network coverage area of the current RRU at the current moment.

In this embodiment and other embodiments, the preset threshold can be set to 200, 500, 800, etc. Since the number of users carried on mobile carriers such as high-speed vehicles, high-speed trains, subways, or airplanes varies in different high-speed communication scenarios, the preset threshold can be flexibly set based on different design needs of actual applications. That is, the control method for the communication networking system of the present application does not limit the size of the preset threshold.

For example, as shown in FIG. 8, assuming the communication device is a base station BBU in a communication networking system, in the high-speed communication scenario -the high-speed rail scenario-where the base station BBU is located, if a high-speed mobile carrier is about to enter cell 2, the base station BBU of that cell will determine whether the mobile carrier enters the RRU1 based on whether the number of user terminals covered by RRU1 in cell 2 meets a certain threshold.

Furthermore, after determining that a high-speed mobile carrier has entered RRU1 in cell 2, the base station BBU can simultaneously determine the traveling direction of the mobile carrier based on the source cell of the mobile carrier-cell 1. That is, the train is about to leave the cell 1 and enter the cell 2. At this time, the base station BBU in the cell 1 can receive the departure signal, while the base station BBU in the cell 3 adjacent to the cell 2 will receive the arrival signal.

If the base station BBU detects that the number of user terminals covered by RRU1 in the cell 2 does not meet the conditions (not exceeding the above threshold), the base station BBU also needs to check if there are other states that have been transmitted (such as the above-mentioned vehicle departure indicator or vehicle about to enter indicator). If so, the original state is maintained; otherwise, the state is no vehicle.

In an embodiment, the control method for the communication networking system of the present application may further include the following steps: step S60, obtaining measurement information continuously reported by the user terminal; step S70, determining the multiple target RRUs with the strongest signals among the multiple RRUs based on the measurement information; and step S80, determining the physical order of the multiple RRUs based on the continuous change pattern of the target RRUs.

In this embodiment, when the communication device learns the physical order of multiple RRUs in the communication networking system, it continuously acquires the measurement information continuously reported by the user terminal to the communication networking system. Then, based on the measurement information continuously reported by the terminal device, the communication device can determine the multiple target RRUs with the strongest signals among the multiple RRUs. Therefore, after generating a continuously changing pattern of the multiple target RRUs, the communication device can learn and determine the physical order of the multiple RRUs in the entire communication networking system based on this continuously changing image.

For example, when the communication device acts as a base station BBU in the communication networking system, the BBU receives SRS measurement information continuously reported by user terminals on high-speed mobile carriers, and identifies the connection direction of each active antenna unit (AAU) based on this SRS measurement information. The user terminal on the mobile carrier receives measurement information from each RRU within a cell, and then select the target RRU with the strongest signal among the multiple RRUs based on the magnitude of the measured values in the RRU measurement information. Subsequently, the base station BBU maintains the change pattern of the target RRU with the strongest signal reported by each high-speed user, to obtain the physical order bitmap of multiple RRUs in the entire cell.

Based on the first and/or second embodiments of the control method for the communication networking system of the present application described above, a third embodiment of the control method for the communication networking system of the present application is proposed.

In the third embodiment of the control method for the communication networking system of the present application, "adjusting the antenna switch of the next RRU" in the step S22 may include: step S221, in response to that there is no opposing carrier in the default network coverage area of the next RRU, adjusting the antenna switch of the next RRU so that the next RRU is connected to the antenna panel on the same side of the current RRU. The traveling direction of the mobile carrier is opposite to the traveling direction of the opposing carrier.

In this embodiment, when the communication device adjusts the connection state between the next RRU and the antenna, it first determines whether there is an opposing vehicle to a mobile carrier (which has already entered the network coverage area of the current RRU) within the default network coverage area of the next RRU. Therefore, the communication device will only start adjusting the antenna switch of the next RRU when it determines that there is no opposing vehicle in the default network coverage area of the next RRU, so as to connect the next RRU with the antenna panel on the same side of the current RRU, thereby controlling the current RRU and the next RRU, and providing uplink and downlink network coverage for the user terminal on the mobile carrier that enters the network coverage area of the current RRU.

In an embodiment, when the communication device detects that there is an opposing mobile carrier within the default network coverage area of the next RRU, even if the high-speed mobile carrier has entered the network coverage area of the current RRU, the communication device will not adjust the antenna switch of the next RRU. This is to ensure that the user terminal on the opposite mobile carrier can at least obtain the uplink and downlink network services provided by the next RRU.

In an embodiment, the antenna panel on the same side of the current RRU includes a first antenna panel and a second antenna panel. Based on this, the step of "adjusting the antenna switch of the next RRU to connect the next RRU with the antenna panel on the same side of the current RRU" can include: when the current RRU is connected to the first antenna panel, adjusting the antenna switch of the next RRU to connect the (i+1)th RRU with the first antenna panel or the second antenna panel.

In this embodiment, when the communication device determines that there is no opposing vehicle within the default network coverage area of the next RRU, and adjusts the antenna switch of the next RRU, if there are two antenna panels on the same side of the current RRU (i.e., a first antenna panel and a second antenna panel), and the current RRU is already connected to the first antenna panel, then the communication device can adjust the antenna switch of the next RRU to connect the next RRU with the first antenna panel as well. Alternatively, the communication device can adjust the antenna switch of the next RRU to connect the next RRU with the second antenna panel.

In an embodiment, if there is only one antenna panel on the same side of the current RRU, and the antenna panel is already connected to the current RRU, the communication device can also adjust the antenna switch of the next RRU to connect the next RRU with the first antenna panel. That is, the first antenna panel is simultaneously connected to both the current RRU and the next RRU adjacent to the current RRU.

In this embodiment and other embodiments, if only one antenna panel is configured on each side of the base station, when the high-speed user is on one side, the RRUs on both sides of the base station can be connected to the antenna panel on one side of the base station through the base station BBU control, to achieve the superposition of the power of the two RRUs. At this time, there is still a 3dB downlink gain. With only one antenna panel configured on each side of the base station, the connection state between the RRU and the antenna panel can be shown in FIG.s 9a, 9b, and 9c, respectively.

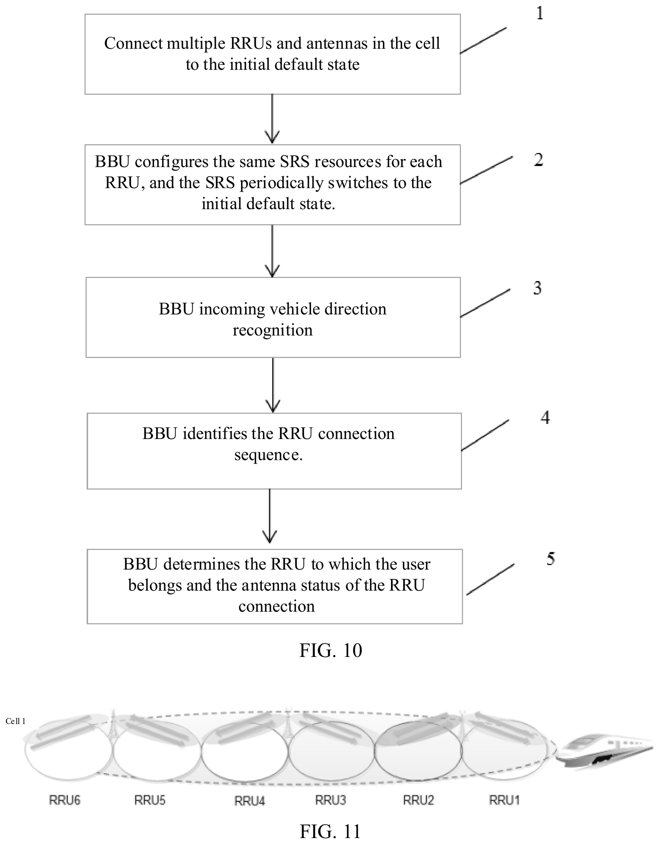

In an embodiment, as shown in FIG. 10, an embodiment of the control method for the communication networking system of the present application is proposed. In this embodiment, the control method for the communication networking system of the present application may include the following steps.

1. A base station BBU of a cell is connected to multiple RRUs. The cell uses the same Cell ID and its associated common channel. The connection state of each RRU and antenna is the initial default state, as shown in FIG. 4b. The RRU on one side of the base station is connected to one antenna panel on its own side. At this time, the antennas on both sides of the base station are directed towards their respective sides, providing uplink and downlink network coverage on the left and right sides. Therefore, as shown in FIG. 7, if a user enters the coverage area of the RRU on one side of the base station, the user's terminal device will only receive the signal from the antenna connected to one of the RRUs, and uplink and downlink services will be received and transmitted independently by that RRU.

2. The communication device, acting as a base station BBU, also configures the same SRS resource for the N RRUs belonging to a high-speed cell. Therefore, at the periodic time point of the SRS configuration, the base station BBU switches the connection state between each RRU and the antenna to the initial default state as shown in FIG. 4b. Then, after the SRS time point, it will immediately switch the connection state between each RRU and the antenna back to the connection state before this SRS time point. For example, in a 5ms frame structure, if the S slot is configured with 4 symbols of SRS, and the base station BBU controls the connection state of RRU1 and RRU2 to the antenna so that both RRU1 and RRU2 are connected to the antenna panel on the left side of the base station, at the beginning of the first SRS symbol, the base station BBU needs to adjust the connection state of RRU2 to the antenna so that RRU2 is connected to the antenna panel on the right side of the base station, while the connection state of RRU1 to the antenna remains unchanged. At this time, the connection state of RRU1 and RRU2 to the antenna is the initial default state. After the 4 SRS symbols are transmitted, the connection state of RRU1 to the antenna remains unchanged, while the connection state of RRU2 to the antenna is immediately switched back by the base station BBU to the original state of being connected to the antenna on the left side of the base station.

3. During the movement of the train, the base station BBU determines whether there is a high-speed mobile carrier-the train-based on whether the number of high-speed users meets a certain threshold. That is, if the number of high-speed users meets the threshold, it is identified as an approaching train. At the same time, the BBU obtains the traveling direction of the train based on the handover source cell of the high-speed users and transmits this traveling direction to the next adjacent high-speed cell. As shown in FIG. 8, when a train is about to enter cell 2, the base station BBU of that cell determines the arrival of the train based on whether the number of high-speed users meets a certain threshold. If the condition is met, it means that the train has arrived, and the direction of the train is obtained based on the source cell of the user being switched, that is, the train is about to leave cell 1. The train departure identifier is transmitted to the base station BBU of cell 1, and the train entry identifier is transmitted to the base station BBU of another neighboring cell of cell 2 - cell 3. Conversely, if the number of high-speed users does not satisfy the condition, it is necessary to check if there are other states that have already been transmitted. If there are, the original state is maintained;

otherwise, the state is "no vehicle".

4. The base station BBU identifies the connection direction of each AAU based on the SRS measurement information from the high-speed user. The high-speed user within the cell receive measurements from each RRU within the cell, and select the RRU with the strongest current signal based on the magnitude of the measurement value. By maintaining the strongest RRU change pattern for each high-speed user, the physical order bitmap of the cell's RRUs is obtained.

5. After receiving the approaching vehicle identifier, the base station BBU determines the location of the RRU to which the high-speed user belongs at the current time based on the measurement information continuously reported by the user equipment (UE) of the high-speed user, selects the current switch state, and notifies the RRU to control the antenna switch, thereby determining the connection relationship between the RRU and the antenna. Based on the RRU with the strongest signal maintained in step 4, the total number of users covered by each RRU is counted in a sliding window manner. At each time moment, the first N statistical windows of the cell are calculated. If the ratio of the number of users UeNum_RRU$_j$ of a certain RRU to the total number of users of all RRUs exceeds a certain threshold, according to the relationship between the traveling direction of the train and the physical order bitmap of the RRU obtained in steps 3 and 4, the base station BBU notifies another RRU on the pole to switch its state to change the connection state with the antenna. At the same time, it can also notify the next RRU to adjust its state or notify the next cell to adjust its state.

$$UeNum\_RRU_j = \sum_{i=1}^{N} Ue_i\_RRU_j$$

In the above formula, j represents cell j, N is the Nth terminal device Ue in the cell j, and i represents the ith terminal device Ue in the cell j.

If the sum of the user ratios of adjacent RRUs between two different poles (base stations) exceeds a threshold, the base station BBU will notify the other RRU on the two poles to switch its state to change the connection state with the antenna. Simultaneously, it can also notify the next RRU to adjust its state or notify the next cell to adjust its state. Detailed switch state changes are as follows:

501, as shown in FIG. 11, when no train is present, each RRU is connected to the antenna in the initial default state shown in FIG. 4b, with cell beam coverage and independent uplink and downlink transmission.

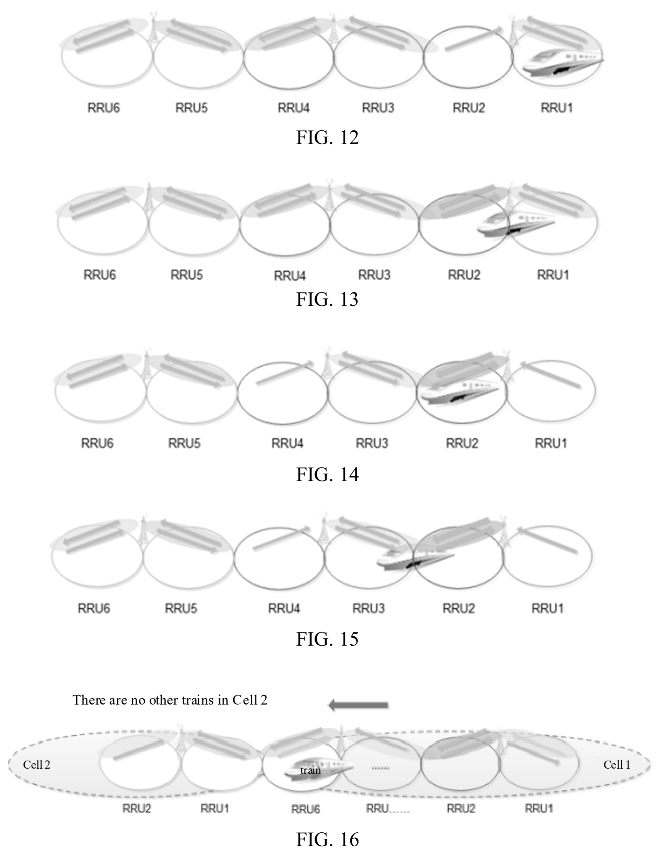

502, as shown in FIG. 12, after the train enters RRU1, the base station BBU, after identifying the incoming train, uses the location information of each RRU learned in step 4 (the order of RRUs is RRU1-RRU2-RRU3-RRU4-RRU5-RRU6) and the direction of the incoming train. When the user ratio of RRU1 reaches the threshold, the base station BBU switches the connection between RRU2 and the antenna to RRU2 connected to the antenna on the right side of the base station, so that RRU2 and RRU1 can work together in the same direction to improve uplink and downlink services for the high-speed user. At this time, the user terminal on the train effectively doubles the uplink and downlink antennas, and the downlink power is also increased by 3dB. For the original coverage area of RRU2, the base station BBU only controls the connection between RRU2 and the antenna to switch to the connection between RRU2 and the antenna on the left side of the base station during SRS moment. The connection state of RRU1 antenna remains unchanged, and the user's uplink and downlink are both jointly received and transmitted by the two RRUs.

503, as shown in FIG. 13, as the train moves, some users begin to enter RRU2. Since RRU1 and RRU2 are on the same base station, the user in RRU1 or RRU2 does not satisfy the ratio. At this time, the base station BBU needs to control the connection between RRU2 and the antenna to switch to the initial default state, that is, adjust RRU2 to be connected to the antenna on the left side of the base station, while the antenna connected to RRU1 remains unchanged.

504, as shown in FIG. 14, as the train moves, the users in the train entering RRU2 satisfies the ratio. At this time, the base station BBU needs to control RRU1 to switch the connection with the antenna to connect with the antenna on the left side of the base station, while RRU2 remains unchanged. Simultaneously, the base station BBU, based on the physical sequence bitmap of the RRUs obtained in step 4, determines the next adjacent RRU3 and RRU4. At this point, the base station BBU controls RRU4 to switch the connection with the antenna to connect with the antenna on the side where RRU3 is located, while the antenna connection of RRU3 remains unchanged. In this way, the user obtains both the 3dB power of RRU1 and the 3dB power gain of RRU4, enabling joint reception of four RRUs in the uplink and joint transmission of four RRUs in the downlink.

505, as shown in FIG. 15, as the train moves, it enters RRU3. Although the users of RRU1 or RRU2 do not satisfy the ratio at this time, RRU2 and RRU3 are not on the same pole. The sum of the user ratios of RRU2 and RRU3 satisfies the threshold. At this time, the base station BBU needs to maintain the connection state of each RRU and antenna according to the same process as 504.

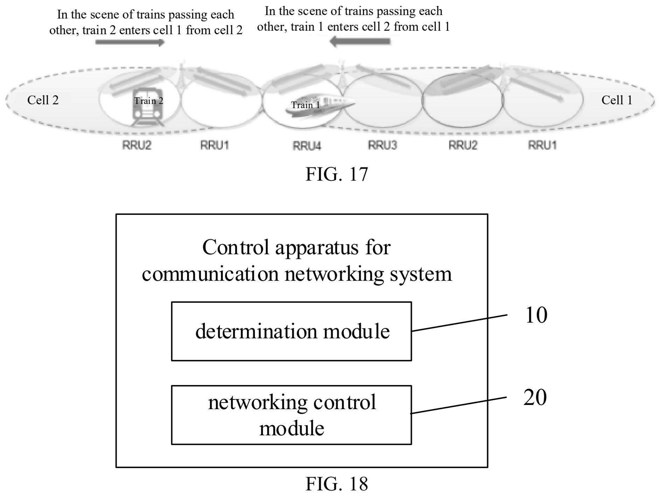

506, as the train moves, in cell 1, the train passes RRU4/RRU5. The processing procedure is the same as 501 to 505 above. When the train reaches RRU6, the antenna of RRU5 in cell 1 is connected to the left side. At this time, the base station BBU determines that the train is about to enter cell 2 based on the direction of the overcoming train. Therefore, if there are no other trains in cell 2 at this time, the base station BBU will control RRU2 in cell 2 to be connected to the antenna on the right side of the base station (as shown in FIG. 16). If there are other trains in cell 2, and train 2 enters RRU2, it will enter RRU1 in the next moment. At this time, the base station BBU will not be able to adjust the connection between RRU1 or RRU2 in cell 2 and the antenna. That is, at this time, RRU1 and RRU2 in cell 2 will maintain their initial default connection with the antenna (as shown in FIG. 17). Otherwise, there will be a relatively large gap in the coverage for the other train.

In this embodiment, based on the connection state of the antennas, if the connection state of the two antennas is on the left or right, the number of antennas is doubled. The base station BBU performs joint demodulation on the uplink channel of the train user to improve the uplink demodulation performance. In terms of downlink power, it is equivalent to two RRUs covering the same area and transmitting, with a power gain of 3dB. At the same time, the downlink service channel performs coherent JT to improve the shaping gain, thereby effectively improving the uplink and downlink perception performance of the user.

Furthermore, the present application also provides a control apparatus for a communication networking system, which is also applied to the communication networking system described above.

Referring to FIG. 18, the control apparatus for the communication networking system of the present application may include: a determination module 10, configured to determine a mobile carrier in a communication scenario; and a networking control module 20, configured to sequentially control the RRUs to provide uplink and downlink network coverage to user terminals on the mobile carrier according to the traveling direction of the mobile carrier and the physical order of multiple RRUs in the communication networking system.

In an embodiment, the network control module 20 includes: a determination unit configured to determine, based on the traveling direction of the mobile carrier and the physical order of the multiple RRUs in the communication networking system, the current RRU that sequentially provides network services to the user terminal on the mobile carrier; a control unit configured to, when the mobile carrier enters the network coverage area of the current RRU, adjust the antenna switch of the next RRU to control the current RRU and the next RRU to simultaneously provide uplink and downlink network coverage for the user terminal.

In an embodiment, the determination module 10 is further configured to obtain the number of user terminals covered by the current RRU; and if the number exceeds a preset threshold, determine that the mobile carrier has entered the network coverage area of the current RRU.

In an embodiment, in some embodiments of the control apparatus for the communication networking system of the present application, the control apparatus for the communication networking system of the present application may further include: a sequence learning module, configured to acquire measurement information continuously reported by the user terminal; determine, based on the measurement information, multiple target RRUs with the strongest signal among the multiple RRUs; and determine, based on the continuous change pattern of the target RRUs, the physical order of the multiple RRUs.

In an embodiment, the control unit is further configured to adjust the antenna switch of the next RRU so that the next RRU is connected to the antenna panel on the same side of the current RRU when there is no opposing vehicle in the default network coverage area of the next RRU. The traveling direction of the mobile carrier is opposite to the traveling direction of the opposing vehicle.

In an embodiment, the antenna panel on the same side of the i-th RRU includes: a first antenna panel and a second antenna panel. The control unit is further configured to, when the current RRU is connected to the first antenna panel, adjust the antenna switch of the next RRU so that the (i+1)-th RRU is connected to the first antenna panel or the second antenna panel.

In an embodiment, the networking control module 20 is further configured to control the multiple RRUs to perform uplink and downlink network coverage on their respective default network coverage areas at the preset time. The preset time is the time when the user terminal reports the channel sounding reference signal to the communication networking system, or the preset time is the time when the communication networking system sends the system information to the user terminal.

The control apparatus for the communication networking system according to the present application adopts the control method for the communication networking system in the above embodiments to determine the high-speed mobile carrier in the communication scenario. According to the traveling direction of the mobile carrier and the physical order of multiple RRUs in the communication networking system, the RRUs are sequentially controlled to provide uplink and downlink network coverage for the user terminals on the mobile carrier. Compared to the related art, the beneficial effects of the control apparatus for the communication networking system according to the embodiment of the present application are the same as the beneficial effects of the control method for the communication networking system provided in the above embodiments, and other technical features in the control apparatus for the communication networking system are the same as the features disclosed in the methods of the above embodiments, and will not be repeated here.

Furthermore, the embodiment of the present application also provides a communication device, which includes: a control apparatus for the communication networking system as described above, a memory, a processor, and a computer program stored in the memory and executable on the processor. The computer program is configured to implement the steps of the control method for the communication networking system as described above.

Furthermore, the embodiment of the present application also provides a storage medium, which is a computer-readable storage medium, and stores a computer program thereon. When the computer program is executed by a processor, the steps of the control method for the communication networking system as described above are implemented.

In this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the prior art can be embodied in the form of software products, the computer software product is stored in one of the above storage medium (such as ROM/RAM, magnetic disk, optical disk), including several instructions to make a terminal device (which may be a mobile phone, a computer, a server, or a network device, etc.) execute the method of each embodiment of the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

**Claims**

1. A control method for a communication networking system, **characterized by** comprising:

   determining a mobile carrier in a communication scenario; and
   sequentially controlling multiple remote radio units, RRUs, in the communication networking system to provide uplink and downlink network coverage to a user terminal on the mobile carrier according to a traveling direction of the mobile carrier and a physical order of the multiple RRUs.

2. The control method for the communication networking system according to claim 1, wherein sequentially controlling the multiple RRUs in the communication networking system to provide uplink and downlink network coverage to the user terminal on the mobile carrier according to the traveling direction of the mobile carrier and the physical order of the multiple RRUs comprises:

   determining a current RRU that sequentially provides network services to the user terminal on the mobile carrier according to the traveling direction of the mobile carrier and the physical order of the multiple RRUs in the communication networking system; and
   in response to that the mobile carrier enters a network coverage area of the current RRU, adjusting an antenna switch of a next RRU of the current RRU to control the current RRU and the next RRU to simultaneously provide uplink and downlink network coverage for the user terminal.

3. The control method for the communication networking system according to claim 2, further comprising:

   obtaining a number of user terminals covered by the current RRU; and
   in response to that the number exceeds a preset threshold, determining that the mobile carrier enters the network coverage area of the current RRU.

4. The control method for the communication networking system according to claim 3, further comprising:

   obtaining measurement information continuously reported by the user terminals;
   determining multiple target RRUs with a strongest signal among the multiple RRUs based on the measurement information; and
   determining the physical order of the multiple RRUs based on continuous change pattern of the multiple target RRUs.

5. The control method for the communication networking system according to claim 2, wherein adjusting the antenna switch of the next RRU comprises:

in response to that there is no opposing vehicle in a default network coverage area of the next RRU, adjusting the antenna switch of the next RRU so that the next RRU is connected to an antenna panel on a same side of the current RRU,
wherein the traveling direction of the mobile carrier is opposite to a traveling direction of the opposing vehicle.

6. The control method for the communication networking system according to claim 5, wherein the antenna panel on the same side of the current RRU comprises a first antenna panel and a second antenna panel;
adjusting the antenna switch of the next RRU so that the next RRU is connected to the antenna panel on the same side of the current RRU comprises:
in response to that the current RRU is connected to the first antenna panel, adjusting the antenna switch of the next RRU so that a (i+1)th RRU is connected to the first antenna panel or the second antenna panel.

7. The control method for the communication networking system according to any one of claims 1 to 6, further comprising:
controlling the multiple RRUs to perform uplink and downlink network coverage on their respective default network coverage areas at a preset time, wherein the preset time is a time when the user terminal reports a channel sounding reference signal to the communication networking system, or the preset time is a time when the communication networking system sends system information to the user terminal.

8. A control apparatus for a communication networking system, **characterized by** comprising:

a determination module configured to determine a mobile carrier in a communication scenario; and
a networking control module configured to sequentially control multiple RRUs in the communication networking system to provide uplink and downlink network coverage to user terminals on the mobile carrier according to a traveling direction of the mobile carrier and a physical order of the multiple RRUs.

9. A communication device, **characterized by** comprising: a memory, a processor, and a computer program stored in the memory and executable on the processor, wherein the computer program is configured to implement the control method for the communication networking system according to any one of claims 1 to 7.

10. A computer-readable storage medium, **characterized in that** a computer program is stored on the storage medium, wherein when the computer program is executed by a processor, the control method for the communication networking system according to any one of claims 1 to 7 is implemented.

1005

1001

processor

1002

operating system

network communication module

user interface module

computer program

1003

1004

user interface

network interface

momery

FIG. 1

S10

determining the mobile carrier in the communication scenario

S20

controlling the RRUs sequentially to provide uplink and downlink network coverage for the user terminals on the mobile carrier according to the traveling direction of the mobile carrier and the physical order of multiple RRUs in the communication networking system

FIG. 2

Two antenna panels
on each side

Two switches, at
every moment is
connected to a
certain antenna panel

RR
U2

RR
U1

Two RRUs are hung
on each pole

FIG. 3

RRU1 is connected to the
antenna panel on the left
side, while the connection
status of RRU2 remains
unchanged

RR
U2

RR
U1

FIG. 4a

Two switches are in their initial states, i.e., RRU is connected to one antenna panel on each side

FIG. 4b

The connection state of RRU1 remains unchanged, while RRU2 is connected to the antenna panel on the right side

FIG. 4c

FIG. 5

FIG. 6

FIG. 7

FIG. 8

FIG. 9a

Two switches are in their initial states, i.e., RRU is connected to one antenna panel on each side

FIG. 9b

Switches for the two RRUs are connected to the right side.

Switches for the two RRUs are connected to the left side

RR U2

RR U1

FIG. 9c

FIG. 10

FIG. 11

FIG. 12

FIG. 13

FIG. 14

FIG. 15

There are no other trains in Cell 2

FIG. 16

In the scene of trains passing each other, train 2 enters cell 1 from cell 2

In the scene of trains passing each other, train 1 enters cell 2 from cell 1

Cell 2     Train 2     Train 1     Cell 1

RRU2    RRU1     RRU4    RRU3    RRU2    RRU1

FIG. 17

Control apparatus for communication networking system

determination module     10

networking control module     20

FIG. 18

## INTERNATIONAL SEARCH REPORT

| International application No. |
|---|
| **PCT/CN2024/098460** |

**A. CLASSIFICATION OF SUBJECT MATTER**

H04W16/20(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC: 射频拉远单元, RRU, 飞机, 高速, 高铁, 车, 方向, 顺序, 第二天线, 调整, 开关, 切换, 同侧, 同一侧, remote radio unit, plane, high speed, rail, train, vehicle, direction, order, sequence, second antenna, adjust+, switch+, same side

**C. DOCUMENTS CONSIDERED TO BE RELEVANT**

| Category* | Citation of document, with indication, where appropriate, of the relevant passages | Relevant to claim No. |
|---|---|---|
| X | CN 106211284 A (CHINA MOBILE COMMUNICATIONS CORP.) 07 December 2016 (2016-12-07) <br> description, paragraphs [0057]-[0115], and figure 5 | 1-4, 7-10 |
| A | CN 102281547 A (COMBA TELECOM SYSTEMS (CHINA) CO., LTD.) 14 December 2011 (2011-12-14) <br> entire document | 1-10 |
| A | CN 115250529 A (DATANG MOBILE COMMUNICATIONS EQUIPMENT CO., LTD.) 28 October 2022 (2022-10-28) <br> entire document | 1-10 |
| A | WO 2018090854 A1 (HUAWEI TECHNOLOGIES CO., LTD.) 24 May 2018 (2018-05-24) <br> entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2024** | **06 September 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/098460**

| Patent document<br>cited in search report | | | Publication date<br>(day/month/year) | Patent family member(s) | Publication date<br>(day/month/year) |
|---|---|---|---|---|---|
| CN | 106211284 | A | 07 December 2016 | None | |
| CN | 102281547 | A | 14 December 2011 | None | |
| CN | 115250529 | A | 28 October 2022 | None | |
| WO | 2018090854 | A1 | 24 May 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310788548